# EUROPEAN PATENT SPECIFICATION

(11) **EP 3 168 489 B1**
(45) Date of publication and mention of the grant of the patent: **06.06.2018**
(21) Application number: 16192503.7
(22) Date of filing: 06.10.2016
(51) Int. Cl.: F16C 33/66, F16C 33/60, F16C 19/06, F16C 17/02, F16C 17/10, F16C 33/58, F16C 19/50

(54) **BALL BEARING ASSEMBLY**
KUGELLAGERBAUGRUPPE
ROULEMENT À BILLES

(30) Priority: 16.11.2015 TW 104137708
(43) Date of publication of application: 17.05.2017
(73) Proprietor: Shine Ying Co., Ltd, 300 Hsinchu City (TW)
(72) Inventor: Lai, Wen-Chen, 300 Hsinchu City (TW)
(74) Representative: Lang, Christian

(56) References cited:
- DE-A1- 2 409 585
- GB-A- 2 136 887
- US-A- 754 436
- US-A- 2 983 557
- US-A- 4 035 026
- US-B1- 6 702 469

## Description

### FIELD OF THE INVENTION

The invention relates to a ball bearing assembly, particularly to a novel configuration of rolling balls with sustainable lubrication and motion mechanisms for improving performance under severe operating conditions.

### BACKGROUND OF THE INVENTION

Various types of sliding bearings possessing self-lubricating feature have been developed. However, the sliding bearings usually fail to long-term operate under severe conditions, such as shaft rotating at high speed, heavy load and strong vibration. Such failures are mainly caused by lack of structural strength and exhaust of lubricating media resulting in decreasing contact pressure and velocity (PV) limits, thus shaft could be directly contacted with axial hole to induce high frequency impacts, excessive wear and heat generation. In addition, poor initial running-in characteristics, deficiency of thrust load capacity and axial back-and-forth movement of the shaft are the industry urgent issues yet to be solved.

Ball bearings are generally formed by using the inner and outer races each with a raceway inside so that plural balls are interposed. According to applied load, the clearance between raceways is reduced in different degrees. Such effect will be occurred on each ball along the raceways rotation and revolution which will induce local excessive wear, grease away from the balls, loss of fitness, and ultimately cause failure. Other disadvantages include limited number of balls to be placed in, high cost, limited thrust load capacity, and weak structure. Thus long-term operation under the aforesaid severe conditions will face tough challenges.

US 3933396 A discloses a ball bushing that includes a sleeve containing a central bore to feed axially distributed plural balls carried by separate raceways into the sleeve. The raceway has curved elastic plates with a concave surface facing the sleeve and a concavo-convex surface facing a shaft and abutting against the plural balls.

US 825956 A discloses a journal roller bearing that includes plural rollers disposed concentric with a shaft and spaced apart by elongated blocks, which are enclosed by an end sealed journal box with only the shaft extending out from the other end. The apposite longitudinal edges of the elongated blacks are concaved to match the shape of the rollers.

US 2983557 A discloses an antifriction bearing comprising a pair of relatively rotatable coaxially positioned race rings formed as an inner ring and an outer ring having spaced balls therebetween. One of the rings is provided with circumferential pockets to respectively receive the balls therein and the other ring is provided with an annular raceway for freely rolling engagement against the balls.

DE 2409585 A1 discloses a bearing comprising a stationary annular housing and a rotating spindle having spaced balls therebetween. The annular housing is provided with a frustoconical surface corresponding to a tapered end of the spindle. The frustoconical surface is provided with circumferential recesses to respectively receive the balls therein and the tapered end is provided with an annular groove that is against the balls.

US 6702469 B1 discloses a resin molded particle such as a bearing, that comprises an annular retainer and spaced roller elements incorporated therein. The roller elements may be balls that are partially protruded from an inner periphery of the retainer to support a shaft.

GB 2136887 A discloses a circular bearing comprising a mental cylindrical support which encircles an outer periphery of an annular plastic matrix. Spaced balls are snapped into and retained in respective recesses on an inner periphery of the matrix, such that a portion of each ball protrudes from the inner periphery to support a shaft.

US 4035026 A discloses a bearing having an inner member fixed on a rotatable axle and an outer member fixed in an outer housing. The two members are engaged by beveled surfaces respectively formed on the members and are moreover engaged with spaced balls arranged therebetween, wherein the balls are respectively received in circumferential depressions on an outer periphery of the inner member and press against a groove on an inner periphery of the outer member.

All the aforesaid disclosures do not provide sustainable self-lubricating and superior motion mechanisms for enhancing the lubricity and the rotation of the balls or rollers, such that in the aforesaid disclosures it is difficult to achieve a long-term self-sustaining low friction operation under severe operating conditions. Their complex compositions also cause mass production and heat dissipation difficulty. Hence to apply those to the above severe operating conditions, especially when the PV limit is larger than 500 MPa·m/min will be subject to serious challenges.

### SUMMARY OF THE INVENTION

The ball bearing assembly includes at least two units being axially coupled together between which at least one set of plural balls is installed to allow a shaft adapted to be run through and supported by the plural balls.

The invention can notably provide many advantages, such as:
The assembly provides sustainable lubrication mechanism to replenish
FIG. **4** is a perspective view of a unit (with partial number of balls) of a second embodiment.
FIG. **5** is a top view of a ball bearing assembly (with a shaft) of the second embodiment.
FIG. **6** is a sectional view along A-A direction of the ball bearing assembly (without a shaft) illustrated in FIG. **5****.**
FIG. **7** is a sectional view of a ball bearing assembly of a third embodiment. FIG. **8** is a sectional view of a unit (with partial number of balls) of a fourth embodiment.
FIG. **9** is a perspective view of a unit (with partial number of balls) of a fifth embodiment.
FIG. **10** is a sectional view of a ball bearing assembly installed on one end of a motor housing of the fifth embodiment.

### DETAILED DESCRIPTION

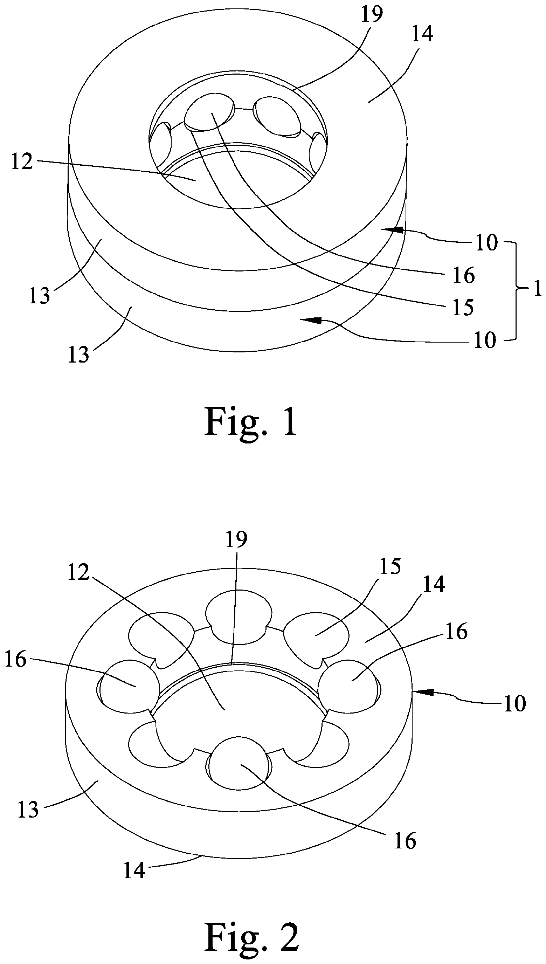

FIGS. **1-3** are a first embodiment of a ball bearing assembly comprising a bearing set **1** including two units **10** being axially coupled together between which plural spherical balls **16** are disposed therein.

Each unit **10** is made from a dense or porous material and includes an outer periphery forming a mounting portion **13,** two ends forming two connection portions **14,** a circular central hole **12** axially running through the two connection portions **14,** and plural hemispherical seats **15** being concaved on a connection portion **14** concentric to the central hole **12** to allow each ball **16** inside the seat **15** adapted to be partially protruded from the central hole **12.** The curvature of the seat **15** is conformed to that of the ball **16.** Plural abutting seats **25** are formed by abutting two sets of plural seats **15** defined in two adjacent connection portions **14** between the two adjacent units **10** to allow the plural balls **16** adapted to be disposed therein. So that the bearing set **1** containing the plural balls **16** between the two adjacent units **10** forms the ball bearing assembly adapted to be run a shaft **6** through protruding surfaces of the plural balls **16.** As such, even the shaft **6** is in direct contact with the plural balls **16** during a initial running-in process, the wear rate is much lower than that of the sliding bearing in which the shaft **6** is direct wear with a wall surface of the axial hole.

In practice, the invention can be applied to different devices; in various embodiments depicted herein a motor is used as the example to facilitate discussion. As such, the ball bearing assembly utilizes the mounting portion **13** to be press-fitted into an inner periphery of a jutting chamber **7** located at each end of a motor housing **5** in the art. Thus the shaft **6** can be run through two stationary ball bearing assemblies in the motor and supported by two sets of plural balls **16.** In particular, compared with the traditional bearing assemblies having an outer shell, the ball bearing assembly is more adaptable to a small precision motor to support a high rotating speed miniature shaft **6.** The jutting chamber **7** in such a motor is limited to a small space, which is better able to house the assembly without the outer shell. Providing the ball bearing assembly with a simple structure and few modularized units **10** in a compact state can enhance the heat dissipation and form a larger storage chamber **35** for more lubricating media storage which will be discussed in the following embodiments.

The unit **10** further includes a convex ring **19** formed on the central hole **12** with a radial height lower than that of vertexes of the protruding surfaces. Two convex rings **19** are preferably formed on both ends of the assembly so as to minimize ingress of foreign matter and lubricating media out of the assembly. The convex ring **19** can be formed on the unit **10** integrally or separately. The lubricating media means lubricating oil and lubricant such as grease or hybrid lubrication agent containing solid lubricating grains that have a higher viscosity than the lubricating oil.

The units **10** are most likely to be made through the powder metallurgy technology to simplify mass production and form a porous structure with good permeability of fluid. Therefore the required density and dimensional accuracy of the units **10** can be singly formed by precision moulds through stamping processes. The lubricating media can be applied through vacuum impregnated with lubricating oil in the capillaries of the units **10** and further the lubricant can be filled in the plural seats **15.**

When the shaft **6** rotates, the lubricating media is expanded due to receiving heat generated by tribology points **30** between the shaft **6** and the protruding surfaces and tribology interfaces between the plural balls **16** and the plural abutting seats **25.** As a result, the viscosity of the lubricating media reduces and fluidity increases, along with capillary force generated by the capillaries and centrifugal force generated by the rotating shaft, the lubricating media can be infiltrated out to the plural abutting seats **25.** Through the rolling of the plural balls **16** in the plural abutting seats **25,** the lubricating media in a form of liquid film is brought to the protruding surfaces so as to continuously replenish through the tribology points **30.** Meanwhile, the surplus lubricating media on the protruding surfaces is brought back to the plural abutting seats **25** so as to recycle the lubricating media. Further, because each ball **16** is pivoted by the abutting seat **25** with good rolling performance causes the tribology point **30** on the ball **16** being constantly changing, so that the load on the shaft **6** can be shared more evenly by the balls **16.** Thus local excessive wear on the surfaces of the balls **16** for the traditional ball bearing can be avoided. The aforesaid superior motion mechanism of the plural balls **16** in the robust plural abutting seats **25** provides strong support for the shaft **6** and can replenish and recycle the lubricating media to greatly prolong the service life.

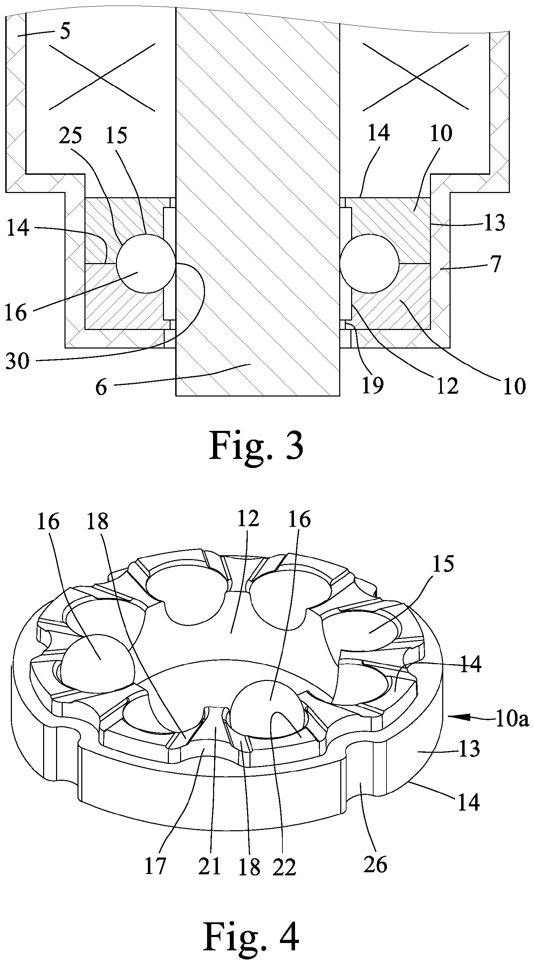

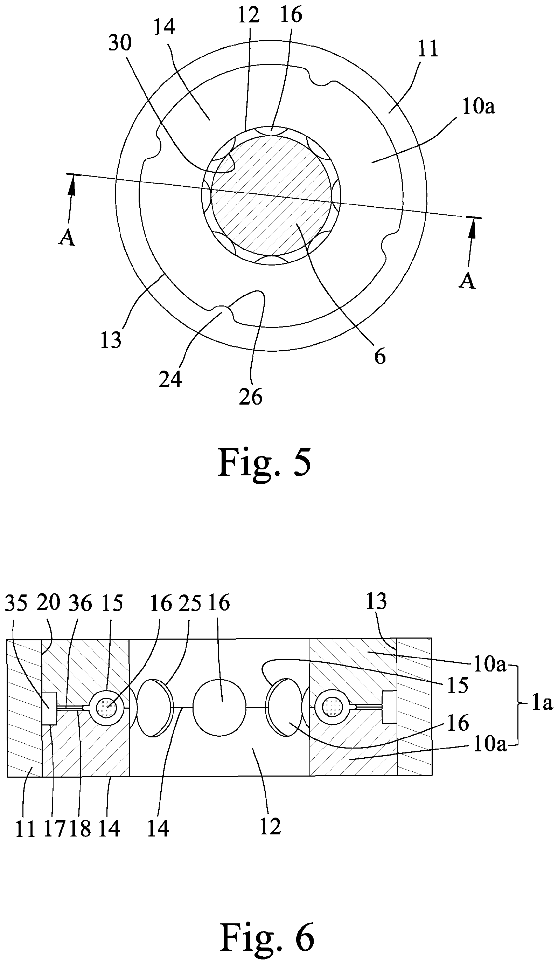

FIGS. **4-6** are a second embodiment of a ball bearing assembly comprising a casing **11** and a bearing set **1a.** The casing **11** is made from a dense or porous material and forms a hollow tube with an axial cavity **20** inside. The cavity **20** also includes at least one axially extended rib **24.** The bearing set **1a** includes two units **10a** being axially coupled together to allow the plural balls **16** adapted to be disposed within the two units **10a**.

The unit **10a** differs from the unit **10** mainly in that the unit **10a** includes a groove **17** and plural notches **18** being formed respectively on the connection portion **14** in which the plural seats **15** are defined. The groove **17** is indented towards and through the mounting portion **13.** The plural notches **18** are indented to communicate with the plural seats **15** and the groove **17.** As such, plural partitions **21** and plural diaphragms **22** are formed on the connection portion **14.** After placing the plural balls **16** into the plural seats **15,** the corresponding two adjacent partitions **21** and two adjacent diaphragms **22** between the two adjacent units **10a** are in contact with each other to form the bearing set **1a**, and the corresponding two adjacent seats **15** and two adjacent notches **18** are respectively forming plural abutting seats **25** and plural passages **36.**

The mounting portion **13** is formed in a shape and size mating the cavity **20** so that the bearing set **1a** can be press-fitted into the casing **11** tightly. In addition, the mounting portion **13** sets at least one slot **26** formed axially thereon to latch on the corresponding at least one rib **24** of the cavity **20.** Similarly, the slot **26** may also be formed on the cavity **20** to latch on the corresponding rib **24** formed on the mounting portion **13.** Further optimizes precise positioning and structural robustness of the ball bearing assembly. As such, a storage chamber **35** is defined within the cavity **20** around two adjacent grooves **17** for storing more lubricating media and communicating with the plural abutting seats **25** via the plural passages **36.** Providing the assembly with a sustainable lubrication mechanism can replenish and recycle the lubricating media within the plural abutting seats **25** for even distribution on the tribology points **30,** which is further beneficial to reduce noise, improve load capacity and anti-vibration capability, and prolong the service life.

The lubrication mechanism is also adaptable to be formed by at least one groove **17** and at least one set of plural notches **18** being indented respectively on at least one of the two adjacent connection portions **14** in which the plural abutting seats **25** are defined. The at least one groove **17** is arranged away from the mounting portion **13** and the at least one set of plural notches **18** is arranged in fluid communication with the plural seats **15** and the at least one groove **17.** So that the storage chamber **35** and the plural passages **36** can be formed respectively by the at least one groove **17** and the at least one set of plural notches **18,** thereby similar to the first embodiment without the casing **11** also can facilitate the lubrication mechanism.

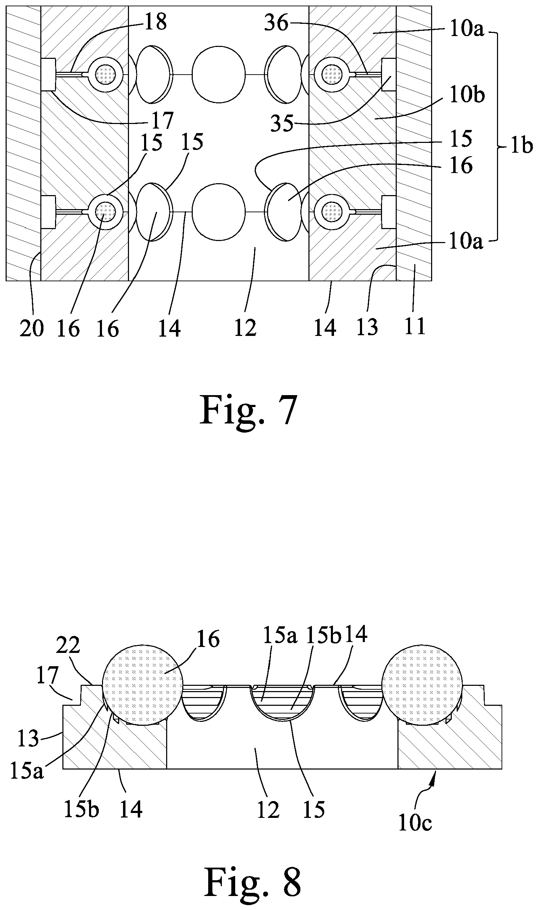

FIG. **7** is a third embodiment to illustrate the loading length extensibility of the ball bearing assembly. A bearing set **1b** includes two types of the units **10a** and **10b** arranged in two pairs of two adjacent units (**10a, 10b**) and (**10b, 10a**) between which a set of plural balls **16** is installed respectively. The bearing set **1b** is press-fitted into the casing **11** via the mounting portion **13** of the three units **10a, 10b, 10a** forming the assembly. The configuration on the two connection portions **14** of the middle unit **10b** is the same as on the adjacent connection portion **14** of the upper and lower units **10a**. Thereby the assembly possesses two sets of lubrication mechanisms for allowing the lubricating media in the two storage chambers **35** via the two sets of plural passages **36** into the two sets of plural abutting seats **25** to lubricate the two sets of plural balls **16** therein and the rotating shaft **6.** Compared with the previous embodiments, the loading length can be extended to share heavier loads by the two sets of plural balls **16;** the storage capacity of the lubricating media is doubled and the tribology points **30** are more evenly distributed along the shaft **6.**

The loading length extensibility for the ball bearing assembly is further illustrated in accordance with different stack modes of the four units **10, 10a,** and **10b.** For example, a stack of the arrangement shown in FIG. **7** can be adopted by the two types of the units **10a, 10b** to form three pairs of two adjacent units (**10a, 10b**), (**10b, 10b**) and (**10b, 10a**). As such, the assembly possesses three sets of lubrication mechanisms. Also for example, the stack of the arrangement shown in FIG. **7** can still be adopted by the two types of the units **10, 10b** to form three pairs of two adjacent units (**10, 10b**), (**10b, 10b**) and (**10b, 10**), only the slots **26** need to be set on the mounting portion **13** of the unit **10** or remove the slots **26** from the unit **10b** to coincide with each other. As such, the assembly possesses three sets of lubrication mechanisms. The difference with the preceding example appeared in (**10, 10b)** and **(10b, 10**) is that the capacity of each storage chamber 35 and the equivalent hydraulic diameter of each set of plural passages **36** are reduced by half.

Accordingly, a desirable loading length of the ball bearing assembly can be realized by axially coupling of at least two units, regardless of whether the assembly has the casing **11** or not, and is adaptable to any unit disclosed in the invention to make possible combinations, including the groove **17** and the notches **18** with differences in shape, size, number and position and also the unit **10** not having the groove **17** and the notches **18.**

FIG. **8** is a fourth embodiment to enhance the rolling performance of the ball **16.** It differs from the previous embodiments mainly in that each seat **15** of a unit **10c** is formed by retaining only a partial spherical surface with curvature conforming to that of the ball **16** and arranged as plural strips interval distributed spherical regions **15b.** A remaining surface of the seat **15** is set to plural concave regions **15a** with radial dimension larger than that of the plural spherical regions **15b.** By limiting the area of the tribology interface between the ball **16** and the seat **15** can reduce rolling friction. Meanwhile, the lubricating media become easier to reside in the concave regions **15a** around the spherical regions **15b** to lubricate the ball **16** promptly, thereby enhancing the reliability of the ball **16.**

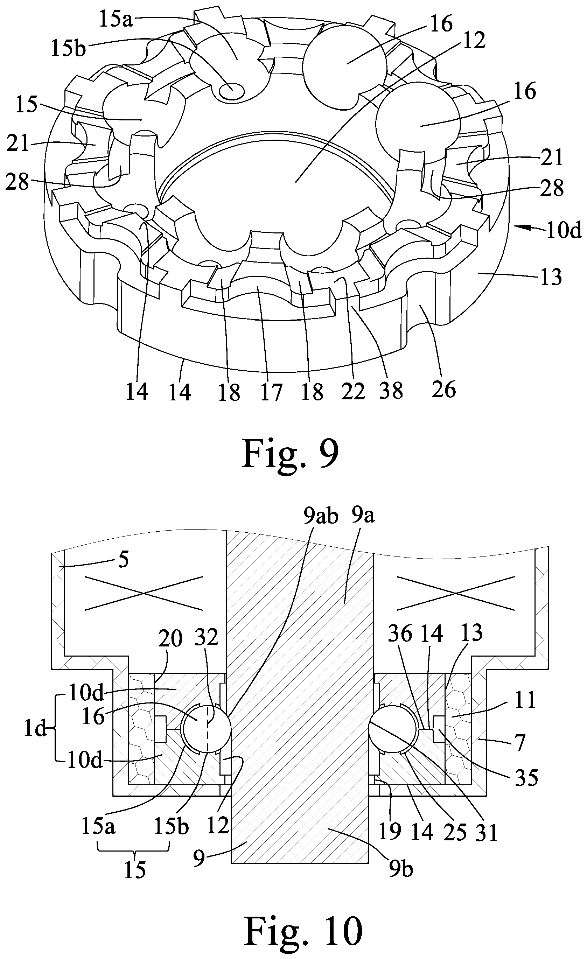

FIGS. **9-10** are a fifth embodiment to further improve the rolling performance of the ball **16,** and disclose a novel three-section shaft **9** so as to pair with the assembly to solve the industry long-term urgent issues that the existing motor shaft **6** run through traditional bearings appears deficiency of thrust load capacity and axial movement of the shaft **6.** The main differences with the previous embodiments are described as follows.

Firstly, plural tendons **38** are set in the groove **17** to enhance structural strength of a unit **10d** shown in FIG. **9** and divide the groove **17** into plural smaller grooves **17.** Further, plural concave channels **28** are respectively arranged in fluid communication with each pair of two neighboring seats **15** of the set of plural seats **15.** Thereby the lubricating media can be filled with both the storage chamber **35** and spaces formed by channels **28** to further optimize the lubricity of the nearby seats **15,** increase the lubricating media storage, and extend the service life of the assembly.

Secondly, the spherical region **15b** defined in the unit **10d** retains at least one spherical surface on the bottom of the seat **15** with surface area within 20% that of the seat **15,** and sets remaining surface as the concave region **15a**. As such, each ball **16** in the abutting seat **25** can be held and supported freely by two spherical pivots through a central axis **32** aligned with centers of the two spherical regions **15b.** The so-called "held and supported" refers to that the position of the ball **16** surface relative to the two spherical regions **15b** is changing at any time. Thus the motion of each ball **16** is pivoted through the central axis **32** which is also automatic centering a rotation axis of the ball **16.** In the following, first uses a traditional shaft **6** to explain the motion mechanism of the ball **16.** Due to the axis of the shaft **6** in parallel with the central axis **32,** a tangential force of the shaft **6** applied to the tribology point **30** (see FIG. **3**) is perpendicular to the rotation axis of the ball **16** causing the ball **16** not only rotation but also rolling. The motion of each ball **16** is not like a globe that is fixedly pivoted to the South and North poles, but rotates around its sphere center through multi-axis alternately to auto-align with the central axis **32** at any instant to achieve the best state of the tribology point **30** with minimum friction between the ball **16** and the shaft **6.** According to the aforesaid excellent rollability of the novel ball **16** motion mechanism, the tribology point **30** may occur anywhere on the ball **16** surface to improve rolling freedom, uniform load allocation, and minimize wear rate of the ball **16.**

Thirdly, as shown in FIG. **10****,** after fixing each assembly on each of two ends of the motor housing **5,** the three-section shaft **9** is run through two sets of plural balls **16** of the two assemblies. The shaft **9** includes a larger section **9a**, two curved sections **9ab**, and two smaller sections **9b.** The larger section **9a** is defined between the two sets of plural balls **16,** and incapable of running through an opening formed by the protruding surfaces of the set of plural balls **16.** The two curved sections **9ab** are respectively defined between the larger section **9a** and each smaller section **9b,** and close against between lateral side surfaces of the two sets of plural balls **16** with curvature conforming to that of the protruding surfaces and forming two sets of tribology curves **31.** The two smaller sections **9b** are respectively defined in extending from each end of the two curved sections **9ab**, and with a diameter fitting just right for running through the opening. Thus the shaft **9** can be achieved by running each smaller section **9b** through the set of plural balls **16** of each assembly, until the two curved sections **9ab** are close against the two sets of plural balls **16.** Similarly, the shaft **9** also can be achieved by running each smaller section **9b** through two sets of plural balls **16** of each assembly shown in FIG. **7****,** until the two curved sections **9ab** are close against two closest sets of plural balls **16** which respectively belongs to each ball bearing assembly. As such, the larger section **9a** is defined between the two closest sets of plural balls **16.**

When the three-section shaft **9** rotates, by means of the two curved sections **9ab** leaning against the two closest sets of plural balls **16,** effectively eliminates the shaft **9** axial movement clearance and strongly supports the axial load applied to the shaft **9.** In addition, the two curved sections **9ab** apply tangential force on the two sets of tribology curves **31** causing the rolling angle of the ball **16** more susceptible to change. Thus the shaft **9** provides the ball **16** more rolling freedom and flexible tribology positions conversion to further optimize rollability of the ball **16.**

Accordingly, the three-section shaft **9** is clearly applicable to pair with the ball bearing assembly formed by axially coupling of the at least two units **10, 10a, 10b, 10c, 10d** between which at least one set of plural balls **16** is installed. Thereby the industry long-term urgent issues relating to poor initial running-in characteristics, deficiency of the thrust load capacity, and axial back-and-forth movement of the shaft can be effectually solved at once.

Further, the unit **10, 10a, 10c, 10d** with the seat **15** facing the cavity **20** can be integrally formed with an inner surface of the casing **11** at one end via the mounting portion **13** to reduce component number and simplify fabrication process for structural robustness and mass production.

While the preferred embodiments of the invention have been set forth for the purpose of disclosure, modifications of the disclosed embodiments of the invention as well as other embodiments thereof may occur to those spilled in the art. The invention is defined by the appended claims only.

## Claims

1. A ball bearing assembly, comprising:
a bearing set (1, 1a, 1b, 1d) including at least two units (10, 10a, 10b, 10c, 10d) being axially coupled together to allow at least one set of plural spherical balls (16) adapted to be installed between at least one pair of two adjacent units (10, 10a, 10b, 10c, 10d) of the at least two units (10, 10a, 10b, 10c, 10d), each unit (10, 10a, 10b, 10c, 10d) including two ends forming two connection portions (14), at least one of the two connection portions (14) being axially connected with an adjacent unit (10, 10a, 10b, 10c, 10d) of the at least two units (10, 10a, 10b, 10c, 10d), an outer periphery forming a mounting portion (13), a circular central hole (12) axially running through the two connection portions (14);
**characterized in that** at least one set of plural hemispherical seats (15) is concaved on the at least one of the two connection portions (14) concentric to the central hole (12) to allow each ball (16) inside the seat (15) adapted to be partially protruded from the central hole (12), at least one set of plural abutting seats (25) being formed by abutting two sets of plural seats (15) defined in two adjacent connection portions (14) between the at least one pair of two adjacent units (10, 10a, 10b, 10c, 10d) to allow the at least one set of plural balls (16) to be disposed therein, so that the assembly is adapted to be run a shaft (6, 9) through protruding surfaces of the at least one set of plural balls (16).

2. The ball bearing assembly of claim **1, characterized in that** at least one groove (17) and at least one set of plural notches (18) are indented respectively on at least one of the two adjacent connection portions (14) between the at least one pair of two adjacent units (10, 10a, 10b, 10c, 10d), the at least one groove (17) forming at least one storage chamber (35) to store lubricating media therein, the at least one set of plural notches (18) communicating with the at least one set of plural seats (15) and the at least one groove (17) and forming at least one set or plural passages (36) to communicate with the at least one set of plural abutting seats (25) and the at least one storage chamber (35).

3. The ball bearing assembly of claim **2, characterized in that** the at least one groove (17) is indented from the at least one of the two adjacent connection portions (14) either towards and through the mounting portion (13) or away from the mounting portion (13).

4. The ball bearing assembly of one of the preceding claims, **characterized in that** the curvature of the seat (15) is conformed to that of the ball (16).

5. The ball bearing assembly of one of the preceding claims, **characterized in that** each of at least one seat (15) of the at least one set of plural seats (15) contains at least one partial spherical surface with curvature conforming to that of the ball (16), and sets remaining surface of each of the at least one seat (15) with radial dimension larger than that of the at least one partial spherical surface.

6. The ball bearing assembly of one of the preceding claims, **characterized in that** the at least one partial spherical surface is arranged as plural interval distributed strips.

7. The ball bearing assembly of one or the preceding claims, **characterized in that** the at least one partial spherical surface is arranged on a bottom of each of the at least one seat (15) with surface area within 20% that of each of the at least one seat (15).

8. The ball bearing assembly of one of the preceding claims, **characterized in that** at least one concave channel (28) is arranged in fluid communication with at least one pair of two neighboring seats (15) of the at least one set of plural seats (15).

9. The ball bearing assembly of claim **2, characterized in that** at least one tendon (38) is set in the at least one groove (17).

10. The ball bearing assembly of one of the preceding claims, **characterized in that** the assembly includes a casing (11) which is a hollow tube with an axial cavity (20) inside, and the mounting portion (13) is formed in a shape and size mating the cavity (20), so that the bearing set (1, 1a, 1b, 1d) can be press-fitted into the casing (11) tightly.

11. The ball bearing assembly of claim **10, characterized in that** the cavity (20) includes at least one rib (24) extended axially and the mounting portion (13) includes at least one slot (26) corresponding to the at least one rib (24) for latching.

12. The ball bearing assembly of claim **10, characterized in that** the cavity (20) includes at least one slot (26) extended axially and the mounting portion (13) includes at least one rib (24) corresponding to the at least one slot (26) for latching.

13. The ball bearing assembly of claim **10, characterized in that** the unit (10, 10a, 10c, 10d) with the seat (15) facing the cavity (20) is integrally formed with an inner surface of the casing (11) at one end via the mounting portion (13).

14. The ball bearing assembly of one of the preceding claims, **characterized in that** at least one unit (10, 10a, 10b, 10c, 10d) of the at least two units (10, 10a, 10b, 10c, 10d) includes at least one convex ring (19) on the central hole (12) with a radial height lower than that of vertexes of the protruding surfaces.

15. The ball bearing assembly of one of the preceding claims, **characterized in that** the shaft (6, 9) to be run through two stationary ball bearing assemblies is a three-section shaft (9) including a larger section (9a), two curved sections (9ab), and two smaller sections (9b),
the larger section (9a) is defined between two closest sets of plural balls (16) which respectively belongs to each assembly, and incapable of running through at least one opening formed by the protruding surfaces,
the two curved sections (9ab) are respectively defined between the larger section (9a) and each smaller section (9b), and close against between lateral side surfaces of the two closest sets of plural balls (16), and
the two smaller sections (9b) are respectively defined in extending from each end of the two curved sections (9ab), and with a diameter fitting just right for running through the at least one opening.

## Patentansprüche

1. Kugellageranordnung, umfassend:
einen Kugellagersatz (1, 1a, 1b, 1d), der mindestens zwei Einheiten (10, 10a, 10b, 10c, 10d) beinhaltet, die axial miteinander verbunden sind, um zu ermöglichen, dass mindestens ein Satz von mehreren sphärischen Kugeln (16) so konfiguriert ist, um zwischen zumindest einem Paar von zwei benachbarten Einheiten (10, 10a, 10b, 10c, 10d) der mindestens zwei Einheiten (10, 10a, 10b, 10c, 10d) eingebaut zu werden, wobei jede Einheit (10, 10a, 10b, 10c, 10d) zwei Enden aufweist, die zwei Verbindungabschnitte (14) bilden, wobei mindestens einer der zwei Verbindungsabschnitte (14) axial mit einer benachbarten Einheit (10, 10a, 10b, 10c, 10d) der mindestens zwei Einheiten (10, 10a, 10b, 10c, 10d) verbunden ist, wobei ein äußerer Umfang einen Befestigungsabschnitt (13) bildet, wobei ein kreisförmiges zentrales Loch (12) axial durch die zwei Verbindungsabschnitte (14) verläuft,
**dadurch gekennzeichnet, dass** mindestens ein Satz von mehreren halbkugelförmigen Aufnahmen (15) konkav an wenigstens einem der zwei Verbindungsabschnitte (14) konzentrisch zu dem zentralen Loch (12) ausgebildet ist, um zu ermöglichen, dass jede Kugel (16) innerhalb der Aufnahme (15) so konfiguriert ist, dass sie teilweise aus dem zentralen Loch (12) herausragt, wobei mindestens ein Satz von mehreren anliegenden Aufnahmen (25) dadurch ausgebildet ist, dass zwei Sätze von mehreren Aufnahmen (15), die in zwei benachbarten Verbindungsabschnitten (14) zwischen dem mindestens einem Paar von zwei benachbarten Einheiten (10,10a, 10b, 10c, 10d) definiert sind, aneinandergrenzen, um zu ermöglichen, dass der wenigstens eine Satz von mehreren Kugeln (16) darin angeordnet wird, sodass die Anordnung dazu ausgelegt ist, sodass ein Schaft (6,9) durch vorstehende Oberflächen des wenigstens einen Satzes von mehreren Kugeln (16) läuft.

2. Kugellageranordnung von Anspruch 1, **dadurch gekennzeichnet, dass** mindestens eine Nut (17) und mindestens ein Satz von mehreren Kerben (18) entsprechend an zumindest einem der zwei benachbarten Verbindungsabschnitte (14) zwischen dem mindestens ein Paar von zwei benachbarten Einheiten (10, 10a, 10b, 10c, 10d) als Einkerbung ausgebildet ist, wobei die mindestens eine Nut (17) mindestens eine Lagerkammer (35) bildet, um darin ein Schmiermittel zu speichern, wobei der mindestens eine Satz von mehreren Kerben (18) mit dem mindestens einen Satz von mehreren Aufnahmen (15) und der mindestens einen Nut (17) in Verbindung steht und mindestens einen Satz von mehreren Durchgängen (36) bildet, um mit dem mindestens einen Satz von anliegenden Aufnahmen (25) und der mindestens einen Lagerkammer (35) zu kommunizieren.

3. Kugellageranordnung von Anspruch 2, **dadurch gekennzeichnet, dass** die mindestens eine Nut (17) von mindestens einem der zwei benachbarten Verbindungsabschnitte (14) entweder in Richtung des und durch den Befestigungsabschnitt (13) hindurch oder von dem Befestigungsabschnitt (13) weg als Einbuchtung vorgesehen ist.

4. Kugellageranordnung nach einem der vorhergehenden Ansprüche, **dadurch gekennzeichnet, dass** die Krümmung der Aufnahme (15) an diejenige der Kugel (16) angepasst ist.

5. Kugellageranordnung nach einem der vorhergehenden Ansprüche, **dadurch gekennzeichnet, dass** jede der mindestens einen Aufnahme (15) des wenigstens einen Satzes von mehreren Aufnahmen (15) mindestens eine teilweise kugelförmige Oberfläche mit einer Krümmung aufweist, die mit der der Kugeln (16) übereinstimmt, wobei die verbleibende Oberfläche von jeder der wenigstens einen Aufnahme (15) so eingestellt ist, dass deren radiale Abmessung größer ist als die der mindestens einen teilweise kugelförmige Oberfläche.

6. Kugellageranordnung nach einem der vorhergehenden Ansprüche, **dadurch gekennzeichnet, dass** die mindestens eine teilweise kugelförmige Oberfläche durch eine Anordnung von mehreren in Intervallen verteilte Streifen ausgebildet ist.

7. Kugellageranordnung nach einem der vorhergehenden Ansprüche, **dadurch gekennzeichnet, dass** die mindestens eine teilweise kugelförmige Oberfläche an einem Boden von jeder der mindestens einen Aufnahme (15) mit einer Oberfläche innerhalb von 20 % von jeder der mindestens einen Aufnahme (15) vorgesehen ist.

8. Kugellageranordnung nach einem der vorhergehenden Ansprüche, **dadurch gekennzeichnet, dass** mindestens ein konkaver Kanal (28) in Fluidverbindung mit mindestens einem Paar von zwei benachbarten Aufnahmen (15) von dem mindestens einen Satz von mehreren Aufnahmen (15) vorgesehen ist.

9. Kugellageranordnung nach Anspruch 2, **dadurch gekennzeichnet, dass** mindestens ein Spannglied (38) in der mindestens einen Nut (17) platziert ist.

10. Kugellageranordnung nach einem der vorhergehenden Ansprüche, **dadurch gekennzeichnet, dass** die Anordnung ein Gehäuse (11) umfasst, welches ein hohles Rohr (20) mit einem axialen Hohlraum (20) im Inneren ist, wobei der Befestigungsabschnitt (13) in einer Form und Größe ausgebildet ist, die zu dem Hohlraum (20) passt, sodass der Kugellagersatz (1, 1a, 1b, 1c, 1d) durch Presspassung fest in dem Gehäuse (11) angebracht werden kann.

11. Kugellageranordnung nach Anspruch 10, **dadurch gekennzeichnet, dass** der Hohlraum (20) mindestens eine Rippe (24) aufweist, die sich axial erstreckt, wobei der Befestigungsabschnitt (13) mindestens einen Schlitz (26) aufweist, der mit der mindestens einen Rippe (24) zur Arretierung korrespondiert.

12. Kugellageranordnung nach Anspruch 10, **dadurch gekennzeichnet, dass** der Hohlraum (20) mindestens einen Schlitz (26) aufweist, der sich axial erstreckt, wobei der Befestigungsabschnitt (13) mindestens eine Rippe (24) aufweist, die mit dem mindestens einen Schlitz (26) zur Arretierung korrespondiert.

13. Kugellageranordnung nach Anspruch 10, **dadurch gekennzeichnet, dass** die Einheit (10, 10a, 10c, 10d) mit der Aufnahme (15), die dem Hohlraum (20) zugewandt ist, integral mit einer Innenfläche des Gehäuses (11) an einem Ende über den Befestigungsabschnitt (13) ausgebildet ist.

14. Kugellageranordnung nach einem der vorhergehenden Ansprüche, **dadurch gekennzeichnet, dass** mindestens eine Einheit (10, 10a, 10b, 10c, 10d) der mindestens zwei Einheiten (10, 10a, 10b, 10c, 10d) mindestens einen konvexen Ring (19) am zentralen Loch (12) mit einer radialen Höhe beinhaltet, die niedriger ist, als diejenige der Scheitelpunkte der vorstehenden Oberflächen.

15. Kugellageranordnung nach einem der vorhergehenden Ansprüche, **dadurch gekennzeichnet, dass** der Schaft (6, 9), der durch zwei stationäre Kugellageranordnungen laufen soll, ein dreigliedriger Schaft (9) ist, der einen größeren Abschnitt (9a), zwei gekrümmte Abschnitte (9ab) und zwei kleinere Abschnitte (9b) umfasst,
wobei der größere Abschnitt (9a) zwischen zwei nächstliegenden Sätzen mehrerer Kugeln (16) definiert ist, die entsprechend zu jeweils einer Anordnung gehören und nicht in der Lage sind, durch mindestens eine durch die vorstehenden Oberflächen ausgebildete Öffnung zu laufen,
wobei die zwei gekrümmten Abschnitte (9ab) jeweils zwischen dem größeren Abschnitt (9a) und jedem kleineren Abschnitt (9b) definiert sind und zwischen den seitlichen Seitenflächen der beiden nächstliegenden Sätze von mehreren Kugeln (16) abschließen, und
wobei die zwei kleinere Abschnitte (9b) jeweils so definiert sind, dass sie sich von jedem Ende der zwei gekrümmten Abschnitte (9ab) erstrecken und einen Durchmesser haben, der genau passend ist, um durch die mindestens eine Öffnung zu laufen.

## Revendications

1. Assemblage de roulements à billes, comprenant:
un ensemble de roulements (1, 1a, 1b, 1d) comprenant au moins deux unités (10, 10a, 10b, 10c, 10d) qui sont couplées axialement l'une à l'autre pour permettre à au moins un ensemble de plusieurs billes sphériques (16) d'être installé entre au moins une paire de deux unités adjacentes (10, 10a, 10b, 10c, 10d) des au moins deux unités (10, 10a, 10b, 10c, 10d), chaque unité (10, 10a, 10b, 10c, 10d) comprenant deux extrémités formant deux portions de raccordement (14), au moins l'une des deux portions de raccordement (14) étant raccordée axialement à une unité adjacente (10, 10a, 10b, 10c, 10d) des au moins deux unités (10, 10a, 10b, 10c, 10d), une périphérie extérieure formant une portion de montage (13), un trou central circulaire (12) traversant axialement les deux portions de raccordement (14);
**caractérisé en ce qu'**au moins un ensemble de plusieurs sièges hémisphériques (15) soit formé de manière concave sur l'au moins une des deux portions de raccordement (14) concentriquement au trou central (12) pour permettre à chaque bille (16) à l'intérieur du siège (15) de faire partiellement saillie depuis le trou central (12), au moins un ensemble de plusieurs sièges d'aboutement (25) étant formé par l'aboutement de deux ensembles de plusieurs sièges (15) définis dans deux portions de raccordement (14) adjacentes entre l'au moins une paire de deux unités adjacentes (10, 10a, 10b, 10c, 10d) pour permettre à l'au moins un ensemble de plusieurs billes (16) d'être disposé à l'intérieur de celui-ci, de sorte que l'assemblage soit apte à permettre le passage d'un arbre (6, 9) à travers des surfaces faisant saillie de l'au moins un ensemble de plusieurs billes (16).

2. Assemblage de roulements à billes selon la revendication 1, **caractérisé en ce qu'**au moins une rainure (17) et au moins un ensemble de plusieurs encoches (18) sont respectivement indentées sur au moins l'une des deux portions de raccordement (14) adjacente entre l'au moins une paire de deux unités adjacentes (10, 10a, 10b, 10c, 10d), l'au moins une rainure (17) formant au moins une chambre de stockage (35) pour stocker un milieu lubrifiant à l'intérieur de celle-ci, l'au moins un ensemble de plusieurs encoches (18) communiquant avec l'au moins un ensemble de plusieurs sièges (15) et l'au moins une rainure (17) et formant au moins un ensemble de plusieurs passages (36) pour communiquer avec l'au moins un ensemble de plusieurs sièges d'aboutement (25) et l'au moins une chambre de stockage (35).

3. Assemblage de roulements à billes selon la revendication 2, **caractérisé en ce que** l'au moins une rainure (17) est indentée à partir de l'au moins une des deux portions de raccordement (14) adjacentes soit vers la portion de montage (13) et à travers celle-ci soit à l'écart de la portion de montage (13).

4. Assemblage de roulements à billes selon l'une des revendications précédentes, **caractérisé en ce que** la courbure du siège (15) est conforme à celle de la bille (16).

5. Assemblage de roulements à billes selon l'une des revendications précédentes, **caractérisé en ce que** chacun de l'au moins un siège (15) de l'au moins un ensemble de plusieurs sièges (15) contient au moins une surface sphérique partielle avec une courbure conforme à celle de la bille (16), et une surface restante de chacun de l'au moins un siège (15) est réglée avec une dimension radiale supérieure à celle de l'au moins une surface sphérique partielle.

6. Assemblage de roulements à billes selon l'une des revendications précédentes, **caractérisé en ce que** l'au moins une surface sphérique partielle est agencée en tant qu'une pluralité de bandes réparties par intervalle.

7. Assemblage de roulements à billes selon l'une des revendications précédentes, **caractérisé en ce que** l'au moins une surface sphérique partielle est agencée sur un fond de chacun de l'au moins un siège (15) avec une superficie égale à au plus 20 % de celle de chacun de l'au moins un siège (15).

8. Assemblage de roulements à billes selon l'une des revendications précédentes, **caractérisé en ce que** l'au moins un canal concave (28) est agencé en communication fluidique avec au moins une paire de deux sièges voisins (15) de l'au moins un ensemble de plusieurs sièges (15).

9. Assemblage de roulements à billes selon la revendication 2, **caractérisé en ce qu'**au moins un tendon (38) est placé dans l'au moins une rainure (17).

10. Assemblage de roulements à billes selon l'une des revendications précédentes, **caractérisé en ce que** l'assemblage comprend un carter (11) qui est un tube creux avec une cavité axiale (20) à l'intérieur de celui-ci, et la portion de montage (13) a une forme et une taille lui permettant de s'accoupler à la cavité (20), de sorte que l'ensemble de roulements (1, 1a, 1b, 1d) puisse être hermétiquement emmanché dans le carter (11).

11. Assemblage de roulements à billes selon la revendication 10, **caractérisé en ce que** la cavité (20) comprend au moins une nervure (24) qui s'étend axialement et la portion de montage (13) comprend au moins une fente (26) qui correspond à l'au moins une nervure (24) pour s'enclencher.

12. Assemblage de roulements à billes selon la revendication 10, **caractérisé en ce que** la cavité (20) comprend au moins une fente (26) qui s'étend axialement et la portion de montage (13) comprend au moins une nervure (24) qui correspond à l'au moins une fente (26) pour s'enclencher.

13. Assemblage de roulements à billes selon la revendication 10, **caractérisé en ce que** l'unité (10, 10a, 10c, 10d) avec le siège (15) faisant face à la cavité (20) est formée solidairement avec une surface intérieure du carter (11) à une extrémité par l'intermédiaire de la portion de montage (13).

14. Assemblage de roulements à billes selon l'une des revendications précédentes, **caractérisé en ce qu'**au moins une unité (10, 10a, 10b, 10c, 10d) des au moins deux unités (10, 10a, 10b, 10c, 10d) comprend au moins un anneau convexe (19) sur le trou central (12) avec une hauteur radiale inférieure à celle des sommets des surfaces faisant saillie.

15. Assemblage de roulements à billes selon l'une des revendications précédentes, **caractérisé en ce que** l'arbre (6, 9) qui doit traverser deux assemblages de roulements à billes immobiles est un arbre à trois sections (9) comprenant une grande section (9a), deux sections incurvées (9ab) et deux petites sections (9b), la grande section (9a) est définie entre deux ensembles les plus proches de plusieurs billes (16) appartenant respectivement à chaque assemblage, et ne pouvant pas traverser au moins une ouverture formée par les surfaces faisant saillie,
les deux sections incurvées (9ab) sont respectivement définies entre la grande section (9a) et chaque petite section (9b) et à proximité entre des surfaces latérales des deux ensembles les plus proches de plusieurs billes (16), et
les deux petites sections (9b) sont respectivement définies pour s'étendre de chaque extrémité des deux sections incurvées (9ab), et avec un diamètre adapté pour un passage ajusté à travers l'au moins une ouverture.
